# EUROPÄISCHE PATENTANMELDUNG

(11) **EP 2 775 089 A1**
(43) Veröffentlichungstag der Anmeldung: **10.09.2014**
(21) Anmeldenummer: 13157631.6
(22) Anmeldetag: 04.03.2013
(51) Int. Cl.: E21B 7/02, E21B 15/00, G01C 21/00, E21B 47/022, G05D 1/02

(54) **Bauarbeitsgerät und Verfahren zum Bestimmen der Position eines Bohrantriebs**

(71) Anmelder: Bauer Spezialtiefbau GmbH, 86529 Schrobenhausen (DE)
(72) Erfinder: SCHWANZ Christoph, D-17498 Neuenkirchen (DE)
(74) Vertreter: Wunderlich, Rainer

(57) **Zusammenfassung**

Die Erfindung betrifft ein Bauarbeitsgerät mit einem Trägergerät, einem an dem Trägergerät gelagerten Mast, einem an dem Mast verfahrbar gelagerten Schlitten, an welchem ein Bohrantrieb zum drehenden Antreiben eines Bohrwerkzeugs angeordnet ist, und mindestens einem Messgerät zum Ermitteln der Position eines definierten Messpunktes am Mastkopf. Es ist eine Messeinrichtung vorgesehen, mittels welcher eine Lageabweichung in horizontaler Richtung zwischen der Position des Messpunktes am Mastkopf und dem am Schlitten angeordneten Bohrantrieb ermittelt werden kann. Die Erfindung betrifft ferner ein Verfahren zum Bestimmen der Position eines Bohrantriebs.

## Beschreibung

Die Erfindung betrifft ein Bauarbeitsgerät gemäß dem Oberbegriff des Anspruchs 1 sowie ein Verfahren zum Bestimmen der Position eines Bohrantriebs gemäß dem Oberbegriff des Anspruchs 14.

Das Bauarbeitsgerät umfasst ein Trägergerät, einen an dem Trägergerät gelagerten Mast, einen an dem Mast verfahrbar gelagerten Schlitten, an welchem ein Bohrantrieb zum drehenden Antreiben eines Bohrwerkzeugs angeordnet ist, und mindestens ein Messgerät zum Ermitteln der Position eines definierten Messpunktes am Mastkopf.

Zum Bestimmen der Position des Bohrantriebs ist es bekannt, die räumliche Position des Mastkopfes, beispielsweise über ein GPS-System, zu ermitteln. Aus der Position des Mastkopfes lässt sich dann bei Kenntnis der axialen Position des Bohrantriebs am Mast auf die räumliche Position des Bohrantriebs rückschließen. Dabei wird angenommen, dass sich der Bohrantrieb aufgrund seiner längsverschieblichen Lagerung am Mast stets in einem definierten Abstand zum Mast beziehungsweise zur Mastlängsachse befindet.

Bei einigen Bohrverfahren, beispielsweise bei der Erstellung von aus einzelnen Gründungselementen gebildeten Pfahl- oder Dichtwänden im Boden, ist die exakte Bestimmung der Position des Bohrantriebs von besonders hoher Relevanz. Je genauer die Position des Bohrantriebs und damit die Position der einzelnen Gründungselemente bestimmt werden kann, desto geringer können die Überschneidungen einzelner Gründungselemente gewählt werden. Die exakte Kenntnis der Position des Bohrantriebs erhöht somit die Wirtschaftlichkeit bei der Erstellung von Pfahl - oder Dichtwänden mit überschnittenen Gründungselementen.

Der Erfindung liegt die **Aufgabe** zugrunde, ein Bauarbeitsgerät und ein Verfahren zum Bestimmen der Position eines Bohrantriebs anzugeben, welche eine besonders wirtschaftliche und exakte Erstellung von Bohrlöchern oder Gründungselementen im Boden ermöglichen.

Die Aufgabe wird erfindungsgemäß durch ein Bauarbeitsgerät mit den Merkmalen des Anspruchs 1 sowie ein Verfahren mit den Merkmalen des Anspruchs 14 gelöst. Bevorzugte Ausgestaltungen der Erfindung sind in den abhängigen Ansprüchen angegeben.

Erfindungsgemäß ist bei dem Bauarbeitsgerät eine Messeinrichtung vorgesehen, mit welcher eine Lageabweichung in horizontaler Richtung zwischen der Position des Messpunktes am Mastkopf und dem am Schlitten angeordneten Drehantrieb ermittelbar ist.

Das Verfahren zeichnet sich erfindungsgemäß dadurch aus, dass mittels einer Messeinrichtung eine Lageabweichung in horizontaler Richtung zwischen der Position des Messpunktes am Mastkopf und dem am Schlitten angeordneten Drehantrieb ermittelt wird.

Die Erfindung basiert auf der Erkenntnis, dass sich während des Betriebs des Bauarbeitsgeräts Lageabweichungen des Bohrantriebs zum Mast ergeben können, welche das Messergebnis der Positionsermittlung über die Position des Mastkopfes verfälschen. Beispielsweise treten beim Betrieb des Bauarbeitsgeräts teilweise Verformungen des Mastes auf, durch welche die Mastlängsachse eine - wenn auch geringfügige - Krümmung einnimmt. Über die Länge des Mastes, welche einige Zehn Meter betragen kann, können sich daraus Abweichungen von mehreren Zentimetern ergeben. Diese setzten sich zudem im zu erstellenden Bohrloch fort, so dass im Hinblick auf eine durchgehende Pfahlwand erhebliche Überschneidungen der einzelnen Pfähle erforderlich sind.

Weitere Lageabweichungen des am Mast geführten Schlittens können sich beispielsweise aufgrund eines Spiels, mit welchem der Schlitten am Mast gelagert ist, oder aufgrund einer ungenauen Positionierung des Bohrantriebs am Schlitten ergeben.

Die Bestimmung der Position des Bohrantriebs beziehungsweise des Schlittens alleine über die Messeinrichtung am Mastkopf ist daher ungenau.

Ein erster Grundgedanke der Erfindung besteht darin, zusätzlich zu der Messeinrichtung zur Bestimmung der Position des Mastkopfes eine weitere Messeinrichtung vorzusehen, mittels welcher die Position des Bohrantriebs relativ zu einem definierten Punkt am Mastkopf ermittelt werden kann. Dieser Bezugspunkt am Mastkopf ist insbesondere durch das am Mastkopf angeordnete Messgerät bestimmbar.

Ein weiterer Grundgedanke der Erfindung kann darin gesehen werden, die Lage - oder Positionsbestimmung des Bohrantriebs durch die Bestimmung einer absoluten Position des Mastkopfes im Raum und die Bestimmung einer Relativposition des Bohrantriebs bezüglich der Position des Mastkopfes durchzuführen. Durch diese Messkette ist es möglich, den Schlitten beziehungsweise Bohrantrieb selbst von Positionsermittlungseinrichtungen freizuhalten. Insbesondere das zumeist empfindliche Gerät zur Bestimmung der Absolutposition eines Punktes ist also nicht am Schlitten, sondern am Mast angeordnet, wo es vor äußeren Einflüssen weitgehend geschützt ist.

Die Messeinrichtung zur Bestimmung der Relativposition des Bohrantriebs zum Mastkopf kann grundsätzlich an einer beliebigen Position angeordnet sein. In einer bevorzugten Ausgestaltung der Erfindung ist vorgesehen, dass die Messeinrichtung oberhalb des Schlittens und/oder des Bohrantriebs, insbesondere zwischen Bohrantrieb und Mastkopf, angeordnet ist.

In einer vorteilhaften Ausgestaltung umfasst die Messeinrichtung ein zwischen dem Bohrantrieb und dem Mastkopf gespanntes Messseil. Über die Ausrichtung des Messseils, insbesondere relativ zur Längsachse des unbelasteten Mastes, lässt sich die Lageabweichung des Bohrantriebs zum Mastkopf beziehungsweise zur Längsachse des Mastes ermitteln. Das Messseil ist vorzugsweise im unbelasteten Zustand des Mastes, das heißt während kein Bohrvorgang ausgeführt wird, parallel zur Mastlängsachse gespannt. Die Lageabweichung kann sich dann insbesondere auf eine Abweichung in Querrichtung zur Mastlängsachse von dem Bezugspunkt am Mastkopf beziehen.

Zum Ermitteln der Lageabweichung des Bohrantriebs zum Mastkopf ist es bevorzugt, dass die Messeinrichtung einen Neigungsmesser umfasst, mittels welchem eine Neigung des zwischen dem Bohrantrieb und dem Mastkopf gespannten Messseils ermittelbar ist. Der Neigungsmesser kann grundsätzlich beliebig gestaltet sein. Beispielsweise ist eine mechanische Neigungsmessung und/oder eine optische Neigungsmessung denkbar. Die Neigungsmessung kann beispielsweise durch die Positionsbestimmung von zwei oder mehr Seilpunkten erfolgen.

In einer bevorzugten Ausführungsform ist der Neigungsmesser an einer Messhülse befestigt, welche an dem Messseil anliegt und die Ausrichtung des Messseils einnimmt. Bei dieser besonders robusten Ausführungsform ist das Messseil durch eine eng anliegende Messhülse geführt, welche frei beweglich aufgehängt ist, so dass die Messhülse möglichst exakt die Ausrichtung des Messseils einnimmt. Der Neigungsmesser ist an der Messhülse befestigt, so dass er sich zusammen mit der Messhülse bewegt und die Ausrichtung der Messhülse und damit des Messseils einnimmt. Zur Aufnahme des Neigungsmessers weist die Messhülse einen Halter auf, welcher insbesondere an einem Außenumfang der Messhülse angeordnet ist.

In einer alternativen Ausgestaltung kann das Neigungsmessgerät jedoch auch fest mit dem Mast verbunden sein und die Neigung des Messseils, beispielsweise optisch, bestimmen.

Zur Bereitstellung einer freien Beweglichkeit der Messhülse ist diese vorzugsweise über ein Kardangelenk aufgehängt.

Erfindungsgemäß ist es bevorzugt, dass der Neigungsmesser eingerichtet ist, die Neigung des Messseils in unterschiedlichen Ebenen zu ermitteln. Beispielsweise können zwei separate Messeinheiten des Neigungsmessers vorgesehen sein, welche beispielsweise um 90° zueinander versetzt um die Achse der Messhülse angeordnet sind.

In einer bevorzugten Ausgestaltung umfasst die Messeinrichtung eine Abstands - oder Längenmesseinrichtung, mit welcher der Abstand des Bohrantriebs von dem Bezugspunkt am Mastkopf bestimmbar ist.

Auf diese Weise lässt sich insbesondere mit dem zwischen dem Bezugspunkt und dem Bohrantrieb gespannten Messseil ein Richtungsvektor bestimmen, entlang welchem der Bohrantrieb angeordnet ist. Durch die zusätzliche Bestimmung des Abstands des Bohrantriebs lässt sich die Position des Bohrantriebs abschließend ermitteln.

Vorzugsweise ist die Längenmesseinrichtung eingerichtet, zur Bestimmung der axialen Position des Bohrantriebs am Mast die Länge des Messseils zwischen dem Bezugspunkt am Mast und dem Bohrantrieb zu ermitteln. Aus der ermittelten Seilneigung sowie der Seillänge lässt sich die tatsächliche Position des Bohrantriebs bestimmen.

Eine robuste und vorteilhafte Ausführung der Erfindung sieht vor, dass die Messeinrichtung im Bereich des Mastkopfes und/oder oberhalb des Verfahrweges des Schlittens angeordnet ist. Die Messeinrichtung, insbesondere der Neigungsmesser zur Ermittlung der Neigung des Messseils, ist also oberhalb des Schlittens und in einem oberen Abschnitt des Mastes angeordnet, so dass eine Messung bei jeder Position des Schlittens am Mast möglich ist. Die sensiblen Messgeräte befinden sich oberhalb des Verfahrweges des Schlittens und sind daher weitestgehend vor Verschmutzungen geschützt.

Unter der Annahme, dass das Messseil entlang einer geraden Linie verläuft, lässt sich über die Länge des Messseils die Position des Schlittens beziehungsweise des Bohrantriebs ermitteln.

Für eine zuverlässige Lagebestimmung ist es erforderlich, dass das Messseil eine gerade Ausrichtung einnimmt, also entlang einer geraden Linie vom Mastkopf zum Bohrantrieb verläuft. Um dies zu gewährleisten, ist vorzugsweise eine Spanneinrichtung zum Spannen des Messseils vorgesehen. Die Spanneinrichtung befindet sich vorzugsweise oberhalb der Messeinrichtung beziehungsweise oberhalb des Neigungsmessers.

Besonders bevorzugt ist es, dass zum Aufnehmen und/oder Spannen des Messseils eine Seilwinde vorgesehen ist. Die Seilwinde stellt zum einen eine variable Länge des Messseils zur Verfügung, um der Bewegung des Schlittens entlang des Mastes Rechnung zu tragen. Zum anderen kann durch die Seilwinde, beispielsweise durch Bereitstellen einer Vorspannung, jederzeit eine zuverlässige Seilstraffung erzeugt werden.

Die Seilwinde ist vorzugsweise an einem Träger im Bereich des Mastkopfes, insbesondere oberhalb der Messeinrichtung beziehungsweise des Neigungsmessers, angeordnet.

In einer bevorzugten Ausführungsform umfasst die Seilwinde eine Längenmesseinrichtung zur Bestimmung der abgespulten Seillänge, um die axiale Position des Schlittens beziehungsweise des Bohrantriebs am Mast zu bestimmen.

Für eine vereinfachte Berechnung der tatsächlichen Position des Bohrantriebs ist es bevorzugt, dass das Messseil am Schlitten und/oder am Bohrantrieb in der Drehachse des Bohrantriebs befestigt ist. Der Schlitten und/oder der Bohrantrieb weist hierzu vorzugsweise eine Anlenkeinrichtung zum Anlenken des Messseils in der Bohrachse auf.

Die Anlenkeinrichtung umfasst vorzugsweise ein Kardangelenk, um das Messseil frei beweglich zu halten, so dass eine exakte und gerade Ausrichtung zum mastkopfseitigen Anlenk- beziehungsweise oder Führungspunkt gewährleistet ist.

In einer weiteren bevorzugten Ausführungsform ist vorgesehen, dass die Messeinrichtung ein im Bereich des Mastkopfes angeordnetes optisches Messgerät aufweist, mittels welchem zum Bestimmen der Lage des Bohrantriebs relativ zu dem Messpunkt am Mastkopf ein Referenzpunkt am Schlitten in der Bohrachse optisch anvisierbar ist.

Das optische Messgerät ist vorzugsweise am Mastkopf befestigt. Der Licht- oder Laserstrahl übernimmt hierbei im Wesentlichen die Funktion des zuvor beschriebenen Messseils. Zum Anvisieren des Referenzpunktes am Schlitten beziehungsweise am Bohrantrieb kann dort eine Zielmarkierung vorgesehen sein.

Das optische Messgerät kann insbesondere einen Laser aufweisen, welcher einen Laserstrahl aussendet. Der Laserstrahl wird so ausgerichtet, dass er den Referenzpunkt am Schlitten beziehungsweise am Bohrantrieb anvisiert. Über die Ausrichtung des Laserstrahls wird die Position des Bohrantriebs beziehungsweise der Bohrachse relativ zu dem Bezugspunkt am Mastkopf ermittelt.

Das optische Messgerät kann beispielsweise als Tachymeter ausgeführt sein. Messgeräte dieser Art sind im Stand der Technik allgemein bekannt, so dass auf Detailausführungen an dieser Stelle verzichtet werden kann.

Zur Bestimmung der absoluten Position des Messpunktes am Mastkopf ist es bevorzugt, dass das Messgerät zur Bestimmung der Position des Messpunktes am Mastkopf als satellitenbasiertes Messgerät, insbesondere als GPS-Gerät, ausgebildet ist. Vorzugsweise weist das GPS-Gerät mindestens zwei Antennen auf, um eine zuverlässige und eindeutige Lagebestimmung im Raum zu ermöglichen.

Mit dem erfindungsgemäßen Bauarbeitsgerät und Verfahren lässt sich exakt die Position des Bohrantriebs, welcher das Bohrwerkzeug oder ein zwischengeordnetes Bohrgestänge aufnimmt, bestimmen. Um zusätzlich eine genaue Lagebestimmung entlang der Längsachse des Gründungselements beziehungsweise des Bohrgestänges oder Bohrwerkzeugs zu ermöglichen, kann eine weitere Messeinrichtung vorgesehen sein, welche die Neigung des Gründungselements beziehungsweise die Neigung des Bohrgestänges und/oder Bohrwerkzeugs ermittelt. Über die so gebildete Messkette lässt sich ausgehend von der Absolutposition des Mastkopfes äußerst zuverlässig die genaue Position und Ausrichtung eines im Boden erstellten Bohrloches oder Gründungselements ermitteln.

Die Erfindung wird nachfolgend anhand einer bevorzugten Ausführungsform, welche in den beiliegenden, schematischen Figuren dargestellt ist, weiter beschrieben. Hierin zeigt:
- Fig. 1: ein erfindungsgemäßes Bauarbeitsgerät im Ruhezustand;
- Fig. 2: einen Ausschnitt des Bauarbeitsgeräts während der Erstellung eines Bohrloches im Boden und

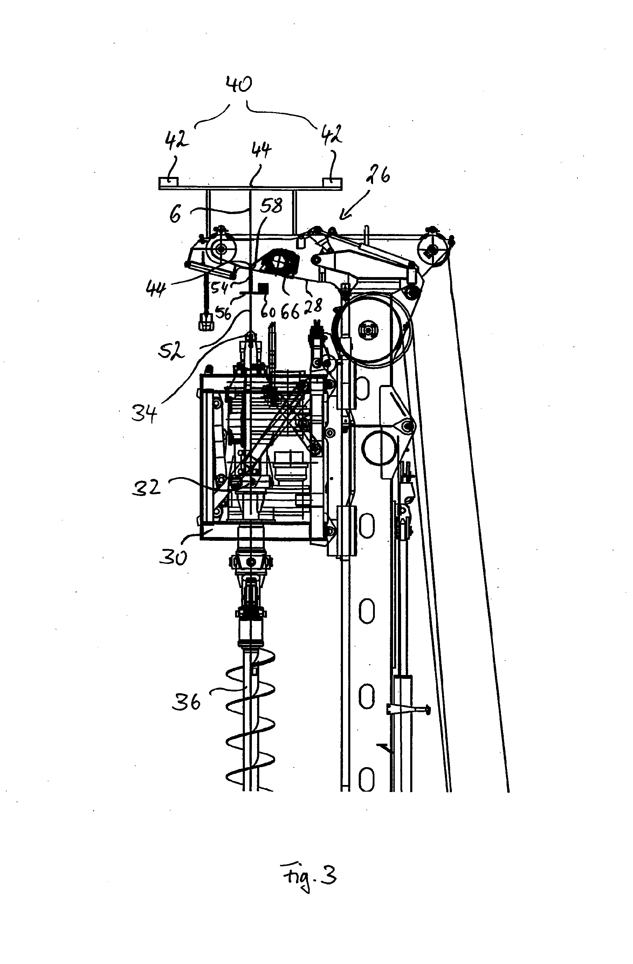

- Fig. 3: eine vergrößerte Darstellung des oberen Bereichs der Fig. 1.

Gleiche oder gleich wirkende Elemente sind in den Figuren mit denselben Bezugszeichen gekennzeichnet.

Ein erfindungsgemäßes Bauarbeitsgerät 10 umfasst ein auf eine Bodenoberfläche 4 aufsetzbares Trägergerät 12, welches in der dargestellten Ausführungsform einen Unterwagen 14 mit einem Fahrgestell und einen um eine vertikale Achse drehbar gelagerten Oberwagen 16 umfasst. An dem Trägergerät 12 ist ein Mast 20 über einen Schwenkmechanismus 22 schwenkbar angelenkt. An dem aufrechten Mast 20 ist ein Schlitten 30 längs verfahrbar gelagert. Der Mast 20 umfasst hierzu eine Linearführung 24 oder Führungsschiene, welche entlang einer Längsachse 21 des Mastes 20 verläuft.

An dem Schlitten 30 ist ein Bohrantrieb 32 oder Kraftdrehkopf zum drehenden und/oder schlagenden Antreiben eines Bohrwerkzeugs 36 angeordnet. Mit dem Bohrwerkzeug 36, welches bei dem dargestellten Bauarbeitsgerät 10 eine Schneckenwendel sowie eine untere Schneideinrichtung aufweist, lässt sich im Boden 2 ein Bohrloch 8 erstellen, welches erfindungsgemäß zum Bilden eines Gründungselementes mit einem aushärtbaren Medium erfüllt werden kann. Das Bauarbeitsgerät 10 ist insbesondere dafür vorgesehen, durch Herstellung von einander überschneidenden Gründungselementen eine Pfahl- oder Dichtwand im Boden zu erstellen. Hierzu werden sukzessive einzelne Gründungselemente im Boden erstellt, wobei bei der Erstellung eines nachfolgenden Gründungselements ein zuvor erstelltes Gründungselement teilweise angeschnitten wird, um eine durchgehende beziehungsweise dichte Wand sicherzugstellen. Die einzelnen Gründungselemente überlagern sich also entlang ihrer Längsachsen um einen bestimmten Betrag.

Zur Erstellung der Bohrung im Boden 2 wird der Schlitten 30 mit dem Bohrantrieb 32 ausgehend von einer oberen Position am Mast 20 nach unten verfahren und auf diese Weise das Bohrwerkzeug 36 entlang einer Bohrachse 6 in den Boden 2 eingebracht.

Zur Bestimmung der Position des Bohrantriebs 32 ist gemäß einem ersten Aspekt im oberen Bereich des Mastes 20, am sogenannten Mastkopf 26, ein Messgerät 40 angeordnet, mit welchem die Lage des Mastkopfes 26 beziehungsweise eines definierten Mess- oder Bezugspunktes 44 des Mastkopfes 26 bestimmt werden kann. Das Messgerät 40 ist vorzugsweise als GPS-Gerät, also als satellitenbasiertes Messgerät, zur Bestimmung der Position im Raum, ausgestaltet. Das Messgerät 40 umfasst zwei oder mehr Messeinheiten 42, welche jeweils eine Antenne aufweisen. Hierdurch lässt sich die Position im Raum eindeutig bestimmen.

Vorzugsweise ist es mit dem Messgerät 40 möglich, eine Messposition am Mastkopf 26 zu bestimmen, welche in direkter axialer Verlängerung einer idealen Bohrachse 6' liegt. Die ideale Bohrachse 6' ist hierbei durch die Position des Bohrantriebs 32 am vollständig geraden Mast 20 und bei unbelastetem Bohrwerkzeug definiert.

Um eine Abweichung der Lage des Bohrantriebs 32 in horizontaler Richtung, also quer zur Mastlängsachse 21, beispielsweise aufgrund einer Verformung des Mastes 20, zu ermitteln, ist zusätzlich zu dem Messgerät 40 eine Messeinrichtung 50 vorgesehen. Die Messeinrichtung 50 ist eingerichtet, eine Lageabweichung des Bohrantriebs 32 in horizontaler Richtung zum Messpunkt 44 zu bestimmen.

Zur Bestimmung der Relativposition des Bohrantriebs 32 bezüglich eines definierten Mess- oder Bezugspunktes am Mastkopf 26 ist zwischen dem definierten Punkt am Mastkopf 26 und dem Bohrantrieb 32 ein Messseil 52 gespannt. Durch die Ermittlung der Neigung und der Länge des Messseils 52 zwischen dem definierten Punkt am Mast und dem Bohrantrieb 32 kann die tatsächliche Lage des Bohrantriebs 32 im Raum bestimmt werden. Die Bestimmung der Lage des Bohrantriebs 32 bezieht sich hierbei insbesondere auf den Anlenkpunkt des Messseils 52 am Bohrantrieb 32. Zum Anlenken des Messseils 52 am Bohrantrieb 32 ist in der durch den Bohrantrieb 32 definierten Bohrachse 6 eine Seilanlenkeinrichtung 34 vorgesehen.

Zur Bestimmung der Seilneigung ist das Messseil 52 durch eine Messhülse 54 geführt. Die Messhülse 54 liegt eng an dem Messseil 52 an, so dass diese die Ausrichtung des Messseils 52 einnimmt. Der Innendurchmesser der Messhülse 54 ist also lediglich geringfügig größer als der Außendurchmesser des Messseils 52, so dass noch ein axiales Gleiten des Messseils 52 in der Messhülse 54 gewährleistet bleibt. Durch Bestimmung der Neigung der Messhülse 54 lässt sich somit auf einfache Weise die Neigung des Messseils 52 ermitteln. Hierzu ist in der dargestellten Ausführungsform an der Messhülse 54 ein Neigungsmesser 60 angeordnet. Die Messhülse 54 weist zur Aufnahme des Neigungsmessers 60 einen Flansch 56 auf. Damit die Messhülse 54 sich ungehindert der Ausrichtung des Messseils 52 anpassen kann, ist die Messhülse 54 über ein Kardangelenk 58 am Mastkopf 26 aufgehängt.

Das Messseil 52 ist am oberen Ende zu einer Seilwinde 66 geführt, welche das Seil aufnimmt und zugleich eine angemessene Seilspannung bereitstellt. Zusätzlich umfasst die Seilwinde 66 eine Längenmesseinrichtung mittels welcher die abgespulte Seillänge ermittelt werden kann, so dass hierüber die axiale Position des Bohrantriebs 32 am Mast 20 ermittelt werden kann. Die Längenmesseinrichtung kann beispielsweise als Drehgeber ausgeführt sein. Die Seilwinde 66 ist an einem Träger 28 am Mastkopf 26 befestigt.

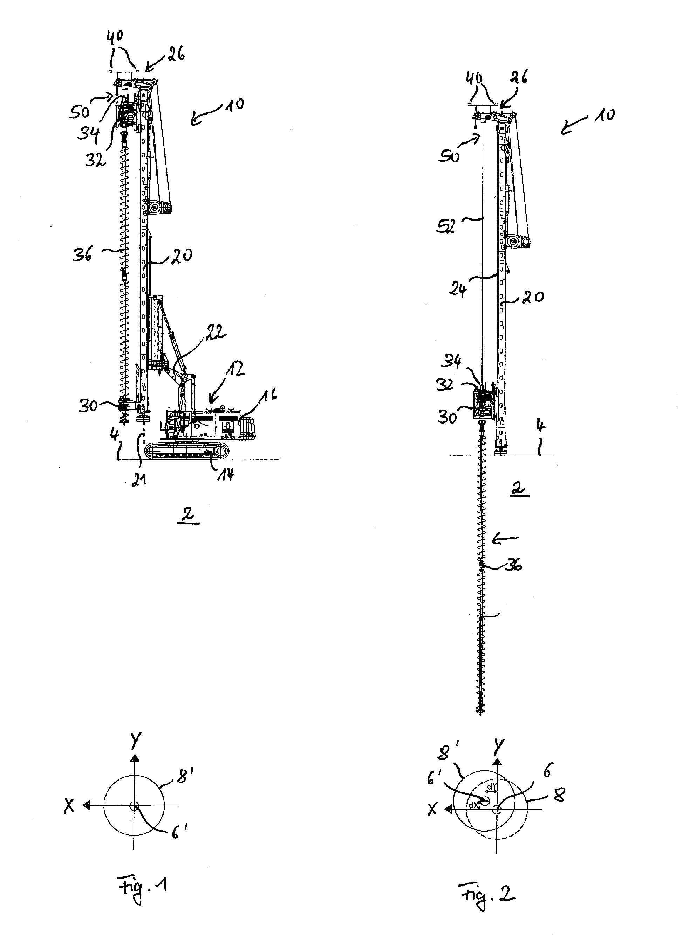

Die mittels der Messeinrichtung 50 zu ermittelnde Lageabweichung ist in den unteren Darstellungen der Figuren 1 und 2 visualisiert. Die Darstellungen zeigen die Position des Bohrloches beziehungsweise Bohrantriebs mit Bohrachse in einem XY-Koordinatensystem.
Fig. 1 zeigt das Bauarbeitsgerät 10 in einer Ausgangsstellung, bei welcher das Bohrwerkzeug 36 noch vollständig oberhalb des Bodens 2 angeordnet ist. In der unteren Darstellung ist die Position der idealen Bohrachse 6' dargestellt, welche sich aus der Position des Bohrantriebs ergibt. Das Bezugszeichen 8' gibt die entsprechende ideale äußere Bohrlochwandung an.
Fig. 2 zeigt das Bauarbeitsgerät 10 in einer Betriebsstellung, bei welcher sich das Bohrwerkzeug 36 zumindest teilweise im Boden 2 befindet. Die sich hierbei ergebenden Lageabweichungen des Bohrantriebs 32 in einer Ebene quer beziehungsweise senkrecht zur Längsachse 21 des Mastes 20 sind in der unteren Darstellung visualisiert. Der gestrichelte Kreis mit dem gestrichelten Zentrum entspricht der in Fig. 1 dargestellten Ausgangslage, wenn sich der Bohrantrieb 32 am oberen Ende des Mastes 20 befindet. Die durchgezogenen Kreislinien stellen das Messergebnis dar. Dabei ist die Bohrachse 6 um einen Betrag dX in X-Richtung und einen Betrag dY in Y-Richtung gegenüber der idealen Bohrachse 6' versetzt. Der entsprechende Rand des Bohrloches ist mit dem Bezugszeichen 8 gekennzeichnet.

## Patentansprüche

1. Bauarbeitsgerät mit
- einem Trägergerät (12),
- einem an dem Trägergerät (12) gelagerten Mast (20),
- einem an dem Mast (20) verfahrbar gelagerten Schlitten (30), an welchem ein Bohrantrieb (32) zum drehenden Antreiben eines Bohrwerkzeugs (36) angeordnet ist, und
- mindestens einem Messgerät (40) zum Ermitteln der Position eines definierten Messpunktes am Mastkopf (26),
**dadurch gekennzeichnet,**
**dass** eine Messeinrichtung (50) vorgesehen ist, mittels welcher eine Lageabweichung in horizontaler Richtung zwischen der Position des Messpunktes am Mastkopf (26) und dem am Schlitten (30) angeordneten Bohrantrieb (32) ermittelbar ist.

2. Bauarbeitsgerät nach Anspruch 1,
**dadurch gekennzeichnet,**
**dass** die Messeinrichtung (50) ein zwischen dem Bohrantrieb (32) und dem Mastkopf (26) gespanntes Messseil (52) umfasst.

3. Bauarbeitsgerät nach Anspruch 2,
**dadurch gekennzeichnet,**
**dass** die Messeinrichtung (50) einen Neigungsmesser (60) umfasst, mittels welchem eine Neigung des zwischen dem Bohrantrieb (32) und dem Mastkopf (26) gespannten Messseils (52) ermittelbar ist.

4. Bauarbeitsgerät nach Anspruch 3,
**dadurch gekennzeichnet,**
**dass** der Neigungsmesser (60) an einer Messhülse (54) befestigt ist, welche an dem Messseil (52) anliegt und die Ausrichtung des Messseils (52) einnimmt.

5. Bauarbeitsgerät nach Anspruch 4,
**dadurch gekennzeichnet,**
**dass** die Messhülse (54) über ein Kardangelenk (58) aufgehängt ist.

6. Bauarbeitsgerät nach einem der Ansprüche 3 bis 5,
**dadurch gekennzeichnet,**
**dass** der Neigungsmesser (60) eingerichtet ist, eine Neigung des Messseils (52) in unterschiedlichen Ebenen zu ermitteln.

7. Bauarbeitsgerät nach einem der Ansprüche 1 bis 6,
**dadurch gekennzeichnet,**
**dass** die Messeinrichtung (50) im Bereich des Mastkopfes (26) und oberhalb des Verfahrweges des Schlittens (30) angeordnet ist.

8. Bauarbeitsgerät nach einem der Ansprüche 2 bis 7,
**dadurch gekennzeichnet,**
**dass** eine Spanneinrichtung zum Spannen des Messseils (52) vorgesehen ist.

9. Bauarbeitsgerät nach einem der Ansprüche 2 bis 8,
**dadurch gekennzeichnet,**
**dass** eine Seilwinde (66) zum Aufnehmen und/oder Spannen des Messseils (52) vorgesehen ist.

10. Bauarbeitsgerät nach Anspruch 9,
**dadurch gekennzeichnet,**
**dass** die Seilwinde (66) an einem Träger (28) im Bereich des Mastkopfes (26) angeordnet ist.

11. Bauarbeitsgerät nach einem der Ansprüche 2 bis 10,
**dadurch gekennzeichnet,**
**dass** der Schlitten (30) und/oder der Bohrantrieb (32) eine Anlenkeinrichtung (34) zum Anlenken des Messseils (52) in der Bohrachse (6) aufweist.

12. Bauarbeitsgerät nach Anspruch 11,
**dadurch gekennzeichnet,**
**dass** die Anlenkeinrichtung (34) ein Kardangelenk umfasst.

13. Bauarbeitsgerät nach einem der Ansprüche 1 bis 12,
**dadurch gekennzeichnet,**
**dass** die Messeinrichtung (50) ein im Bereich des Mastkopfes (26) angeordnetes optisches Messgerät aufweist, mittels welchem zum Bestimmen der Lage des Bohrantriebs (32) relativ zu dem Messpunkt am Mastkopf (26) ein Referenzpunkt am Schlitten (30) in der Bohrachse (6) optisch anvisierbar ist.

14. Bauarbeitsgerät nach einem der Ansprüche 1 bis 13,
**dadurch gekennzeichnet,**
**dass** das Messgerät (40) zur Bestimmung der Position des Messpunktes am Mastkopf (26) als satellitenbasiertes Messgerät ausgebildet ist.

15. Verfahren zum Bestimmen der Position eines Bohrantriebs (32), welcher an einem Schlitten (30) angeordnet ist, der an einem Mast (20) verfahrbar gelagert ist, insbesondere mittels einer Vorrichtung (10) nach einem der Ansprüche 1 bis 14, wobei zur Bestimmung der Position des Bohrantriebs (32) die Position eines definierten Messpunktes am Mastkopf (26) ermittelt wird,
**dadurch gekennzeichnet,**
**dass** mittels einer Messeinrichtung (50) eine Lageabweichung in horizontaler Richtung zwischen der Position des Messpunktes am Mastkopf (26) und dem am Schlitten (30) angeordneten Bohrantrieb (32) ermittelt wird.

## Geänderte Patentansprüche

### Geänderte Patentansprüche gemäss Regel 137(2) EPÜ.

**1.** Bauarbeitsgerät mit
- einem Trägergerät (12),
- einem an dem Trägergerät (12) gelagerten Mast (20) mit Mastkopf (26),
- einem an dem Mast (20) verfahrbar gelagerten Schlitten (30), an welchem ein Bohrantrieb (32) zum drehenden Antreiben eines Bohrwerkzeugs (36) angeordnet ist, und
- mindestens einem Messgerät (40), welches am Mastkopf (26) zum Ermitteln der Position eines definierten Messpunktes am Mastkopf (26) angeordnet ist,
**dadurch gekennzeichnet,**
**dass** eine Messeinrichtung (50) vorgesehen ist, mittels welcher eine Relativposition in horizontaler Richtung zwischen dem Messpunkt am Mastkopf (26) und dem am Schlitten (30) angeordneten Bohrantrieb (32) ermittelbar ist.

**2.** Bauarbeitsgerät nach Anspruch 1,
**dadurch gekennzeichnet,**
**dass** die Messeinrichtung (50) ein zwischen dem Bohrantrieb (32) und dem Mastkopf (26) gespanntes Messseil (52) umfasst.

**3.** Bauarbeitsgerät nach Anspruch 2,
**dadurch gekennzeichnet,**
**dass** die Messeinrichtung (50) einen Neigungsmesser (60) umfasst, mittels welchem eine Neigung des zwischen dem Bohrantrieb (32) und dem Mastkopf (26) gespannten Messseils (52) ermittelbar ist.

**4.** Bauarbeitsgerät nach Anspruch 3,
**dadurch gekennzeichnet,**
**dass** der Neigungsmesser (60) an einer Messhülse (54) befestigt ist, welche an dem Messseil (52) anliegt und die Ausrichtung des Messseils (52) einnimmt.

**5.** Bauarbeitsgerät nach Anspruch 4,
**dadurch gekennzeichnet,**
**dass** die Messhülse (54) über ein Kardangelenk (58) aufgehängt ist.

**6.** Bauarbeitsgerät nach einem der Ansprüche 3 bis 5,
**dadurch gekennzeichnet,**
**dass** der Neigungsmesser (60) eingerichtet ist, eine Neigung des Messseils (52) in unterschiedlichen Ebenen zu ermitteln.

**7.** Bauarbeitsgerät nach einem der Ansprüche 1 bis 6,
**dadurch gekennzeichnet,**
**dass** die Messeinrichtung (50) im Bereich des Mastkopfes (26) und oberhalb des Verfahrweges des Schlittens (30) angeordnet ist.

**8.** Bauarbeitsgerät nach einem der Ansprüche 2 bis 7,
**dadurch gekennzeichnet,**
**dass** eine Spanneinrichtung zum Spannen des Messseils (52) vorgesehen ist.

**9.** Bauarbeitsgerät nach einem der Ansprüche 2 bis 8,
**dadurch gekennzeichnet,**
**dass** eine Seilwinde (66) zum Aufnehmen und/oder Spannen des Messseils (52) vorgesehen ist.

**10.** Bauarbeitsgerät nach Anspruch 9,
**dadurch gekennzeichnet,**
**dass** die Seilwinde (66) an einem Träger (28) im Bereich des Mastkopfes (26) angeordnet ist.

**11.** Bauarbeitsgerät nach einem der Ansprüche 2 bis 10,
**dadurch gekennzeichnet,**
**dass** der Schlitten (30) und/oder der Bohrantrieb (32) eine Anlenkeinrichtung (34) zum Anlenken des Messseils (52) in der Bohrachse (6) aufweist.

**12.** Bauarbeitsgerät nach Anspruch 11,
**dadurch gekennzeichnet,**
**dass** die Anlenkeinrichtung (34) ein Kardangelenk umfasst.

**13.** Bauarbeitsgerät nach einem der Ansprüche 1 bis 12,
**dadurch gekennzeichnet,**
**dass** die Messeinrichtung (50) ein im Bereich des Mastkopfes (26) angeordnetes optisches Messgerät aufweist, mittels welchem zum Bestimmen der Lage des Bohrantriebs (32) relativ zu dem Messpunkt am Mastkopf (26) ein Referenzpunkt am Schlitten (30) in der Bohrachse (6) optisch anvisierbar ist.

**14.** Bauarbeitsgerät nach einem der Ansprüche 1 bis 13,
**dadurch gekennzeichnet,**
**dass** das Messgerät (40) zur Bestimmung der Position des Messpunktes am Mastkopf (26) als satellitenbasiertes Messgerät ausgebildet ist.

**15.** Verfahren zum Bestimmen der Position eines Bohrantriebs (32), welcher an einem Schlitten (30) angeordnet ist, der an einem Mast (20) verfahrbar gelagert ist, insbesondere mittels einer Vorrichtung (10) nach einem der Ansprüche 1 bis 14, wobei zur Bestimmung der Position des Bohrantriebs (32) die Position eines definierten Messpunktes am Mastkopf (26) ermittelt wird, **dadurch gekennzeichnet,**
**dass** während des Bohrbetriebes mittels einer Messeinrichtung (50) eine Lageabweichung in horizontaler Richtung zwischen der Position des Messpunktes am Mastkopf (26) und dem am Schlitten (30) angeordneten Bohrantrieb (32) ermittelt wird.
